# DEMANDE DE BREVET EUROPEEN

(11) **EP 1 327 854 A1**
(43) Date de publication de la demande: **16.07.2003**
(21) Numéro de dépôt: 03290096.1
(22) Date de dépôt: 14.01.2003
(51) Int. Cl.: G01C 15/00, H01Q 1/12, G01B 11/26

(54) **Dispositif de positionnement angulaire, cale et utilisation du dispositif**

(30) Priorité: 15.01.2002 FR 0200435
(71) Demandeur: FRANCE TELECOM, 75015 Paris (FR)
(72) Inventeur: Heleu, Robert, 31700 Blagnac (FR)
(74) Mandataire: Habasque, Etienne Joel Jean-François

(57) **Abrégé**

L'invention concerne un dispositif de positionnement angulaire. Celui-ci comporte un émetteur laser (3) d'inclinométrie et des moyens d'inclinaison de l'émetteur laser (3) d'inclinométrie dans un plan d'inclinométrie. Il est prévu au moins une paire de premier et deuxième émetteurs laser (18, 19) collimatés de référence, destinée à définir une direction (22) de référence par rapport à une paire de première et deuxième surfaces de détection de passage des premier et deuxième faisceaux laser (20, 21) de référence.

## Description

L'invention concerne un dispositif de positionnement angulaire, une cale pouvant être utilisée dans ce dispositif et une utilisation du dispositif.

Un tel dispositif peut servir à vérifier qu'un angle déterminé est présent entre des objets déterminés depuis un point donné ou à déterminer la valeur d'un angle entre des objets depuis un point donné.

Le document US-A-5 604 987 décrit un niveau laser émettant un rayon laser pour contrôler l'horizontalité d'un objet sur lequel il est posé. Ce niveau laser peut être réglé suivant un angle déterminé par rapport à l'horizontale pour positionner visuellement par le rayon laser un objet distant.

Le positionnement fourni par ce niveau laser s'avère peu précis et ne convient pas à des applications nécessitant de vérifier qu'une valeur donnée d'angle est bien présente.

Le document US-A-5 531 031 prévoit un appareil dans lequel la position angulaire de l'émetteur laser et du faisceau laser qu'il émet peut être modifiée en faisant tourner un bouton de commande d'angle de l'émetteur laser selon l'une parmi plusieurs positions angulaires par rapport à une direction longitudinale du dispositif. La détermination de l'angle est effectuée par lecture de la position du bouton de commande par rapport à des repères d'angle.

Le positionnement angulaire fourni par cet appareil est également imprécis. La détermination d'un angle peut également y être effectuée en faisant la différence des indications d'angles du bouton de commande entre deux positions rotatives successives de l'émetteur laser.

Ainsi, si le boîtier de l'appareil a bougé, par exemple en raison de vibrations de la surface sur laquelle il est posé ou du simple fait que l'on manipule le bouton de commande, la détermination de l'angle est faussée.

De plus, les dispositifs mentionnés ci-dessus se prêtent mal à la détection de petites fluctuations d'angles d'un objet devant garder une position angulaire égale à une valeur prédéterminée.

L'invention vise à obtenir un dispositif de mesure permettant de pallier les inconvénients de l'état de la technique.

A cet effet, un premier objet de l'invention est un dispositif de positionnement angulaire comportant un boîtier ayant au moins un émetteur laser d'inclinométrie, apte à émettre un faisceau laser collimaté d'inclinométrie, et des moyens d'inclinaison de l'émetteur laser d'inclinométrie dans un plan d'inclinométrie, pour le positionnement angulaire du faisceau laser d'inclinométrie, caractérisé en ce qu'il est fixé dans le boîtier au moins une paire de premier et deuxième émetteurs laser collimatés de référence, de manière à émettre des premier et deuxième faisceaux laser de référence visibles et collimatés, sortant de première et deuxième surfaces latérales opposées du boîtier et sensiblement parallèles, ladite paire d'émetteurs laser de référence étant destinée à définir une direction de référence par rapport à une paire de première et deuxième surfaces de détection de passage des premier et deuxième faisceaux laser de référence, les moyens d'inclinaison étant aptes à incliner le faisceau laser d'inclinométrie par rapport à ladite direction de référence.

Grâce à l'invention, il est possible de déterminer simultanément la position spatiale des deux côtés rectilignes définissant l'angle, ce qui permet d'améliorer la précision du positionnement angulaire. Ainsi, il est rendu possible de connaître par rapport à quelle direction l'angle est positionné. L'erreur de positionnement par rapport à une direction prescrite peut ainsi être détectée.

Suivant d'autres caractéristiques de l'invention :
- les premier et deuxième émetteurs laser de référence sont fixés dans le boîtier par des entretoises de fixation ;
- les premier et deuxième émetteurs laser de référence sont fixés dans le boîtier de manière à émettre des premier et deuxième faisceaux laser de référence alignés ;
- l'émetteur laser d'inclinométrie est monté mobile en rotation sur un axe de rotation et les moyens d'inclinaison comprennent des moyens d'entraînement en rotation de l'émetteur laser d'inclinométrie par rapport à l'axe de rotation ;
- les moyens d'entraînement comportent un moteur dont l'arbre rotatif est solidaire en rotation de l'émetteur laser d'inclinométrie en son axe de rotation ;
- les moyens d'entraînement comportent un moteur dont l'arbre rotatif est relié à une biellette excentrée par rapport à l'arbre rotatif et reliée à l'émetteur laser d'inclinométrie à distance de son axe de rotation, pour faire tourner l'émetteur laser d'inclinométrie par rotation de l'arbre rotatif du moteur ;
- les moyens d'entraînement comprennent un moteur linéaire, dont la tige mobile linéairement est reliée à l'émetteur laser d'inclinométrie à distance de son axe de rotation, pour faire tourner l'émetteur laser d'inclinométrie par déplacement linéaire de la tige mobile ;
- le boîtier comporte un récepteur d'ondes électromagnétiques pour la télécommande de la position des moyens d'inclinaison ;
- le dispositif de positionnement angulaire comporte un dispositif d'indication de l'angle défini par le faisceau laser d'inclinométrie ;
- le boîtier comporte au moins un niveau à bulle de lecture de position horizontale de la direction de référence ;
- le boîtier comporte au moins un niveau à bulle de lecture de position verticale du plan d'inclinométrie.

Un deuxième objet de l'invention est une cale comportant une surface fixe, caractérisée en ce qu'elle comporte en outre une surface de détection de passage de faisceau laser et des moyens de réglage de la position transversale de la surface de détection par rapport à la surface fixe.

Suivant d'autres caractéristiques :
- la surface de détection comprend une surface ayant une couche fluorescente sensible à l'incidence d'un faisceau laser déterminé ;
- les moyens de réglage comportent une vis de réglage manuel de ladite position transversale.

Un troisième objet de l'invention est une utilisation du dispositif de positionnement angulaire pour contrôler l'angle d'élévation d'une parabole d'émission/réception d'informations vers ou depuis un satellite artificiel.

L'invention sera mieux comprise à la lecture de la description qui va suivre, donnée uniquement à titre d'exemple non limitatif en référence aux dessins annexés, sur lesquels :
- la figure 1 est une vue schématique frontale de l'intérieur d'un boîtier du dispositif de positionnement angulaire suivant l'invention ;
- la figure 2 est une vue schématique frontale de l'intérieur du boîtier selon la figure 1, dans lequel le moteur a été omis pour plus de clarté et des niveaux à bulle sont représentés ;
- la figure 3 est une vue schématique de dessus d'une partie de l'intérieur du boîtier selon les figures 1 et 2 ;
- la figure 4 est une vue schématique de côté de l'intérieur du boîtier selon les figures 1 à 3 ;
- la figure 5 est une vue schématique frontale de l'intérieur du boîtier selon la figure 4 ;
- la figure 6 est une vue schématique frontale du dispositif utilisé avec des cales de positionnement ;
- la figure 7 représente schématiquement les cales selon la figure 6 selon deux positions différentes par rapport à un faisceau laser ;
- la figure 8 représente schématiquement l'intérieur des cales selon les figures 6 et 7 ;
- la figure 9 représente schématiquement une cale selon les figures 6 à 8 ;
- la figure 10 est une vue schématique frontale d'une utilisation du dispositif de mesure d'angle suivant l'invention.

Aux figures, le dispositif de positionnement angulaire suivant l'invention comporte un boîtier 1 ayant une surface inférieure 2 de sustentation permettant de disposer de manière fixe le boîtier 1 sur un support ou sur le sol.

Le boîtier 1 est par exemple de forme générale parallélépipédique et la surface 2 de sustentation rectangulaire plane.

Dans le boîtier 2 est monté un émetteur 3 laser d'inclinométrie tournant sur un axe 4 de rotation monté par l'intermédiaire de paliers non représentés dans le boîtier 2.

L'émetteur laser 3 d'inclinométrie est apte à émettre un faisceau laser collimaté d'inclinométrie 5.

Le boîtier 2 comporte sur sa face supérieure 6 une fenêtre 7 pour le passage du faisceau laser 5. Le plan de rotation de l'émetteur laser 3 d'inclinométrie définit un plan d'inclinométrie dans lequel le faisceau laser 5 est compris.

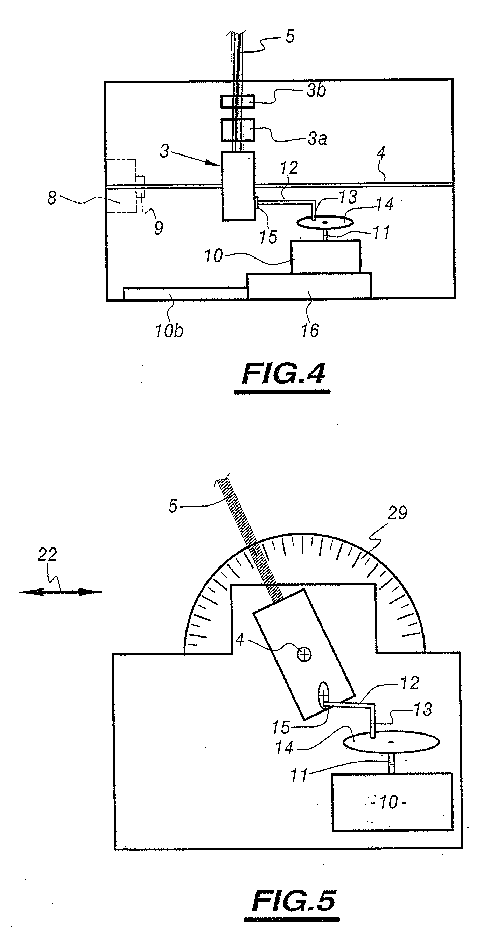

Des moyens sont prévus pour incliner l'émetteur laser 3 d'inclinométrie dans le plan d'inclinométrie. Ces moyens d'inclinaison comprennent par exemple un moteur 8 dont l'arbre 9 de rotor est solidaire et coaxial de l'axe 4 de rotation et de l'émetteur laser 3, pour pouvoir le faire tourner autour de cet axe 4, ainsi que représenté à la figure 4 en traits interrompus.

Dans un autre exemple de réalisation, représenté en traits pleins aux figures 4 et 5, les moyens d'inclinaison comportent un moteur 10 dont l'arbre 11 de rotor se trouve dans un plan transversal à l'axe 4 de rotation. L'arbre 11 de rotor est relié mécaniquement à l'émetteur laser 3 par l'intermédiaire d'une biellette 12 coudée, dont la première extrémité 13 est articulée sur une pièce intermédiaire 14 solidaire de l'arbre 11, à distance de l'axe de l'arbre 11 et dont la deuxième extrémité 15 est articulée sur l'émetteur laser 3, à distance de son axe de rotation 4. La biellette 12 est montée, de manière à provoquer la rotation de l'émetteur 3 autour de l'axe 4 par rotation de l'arbre 11 entraîné par le moteur 10.

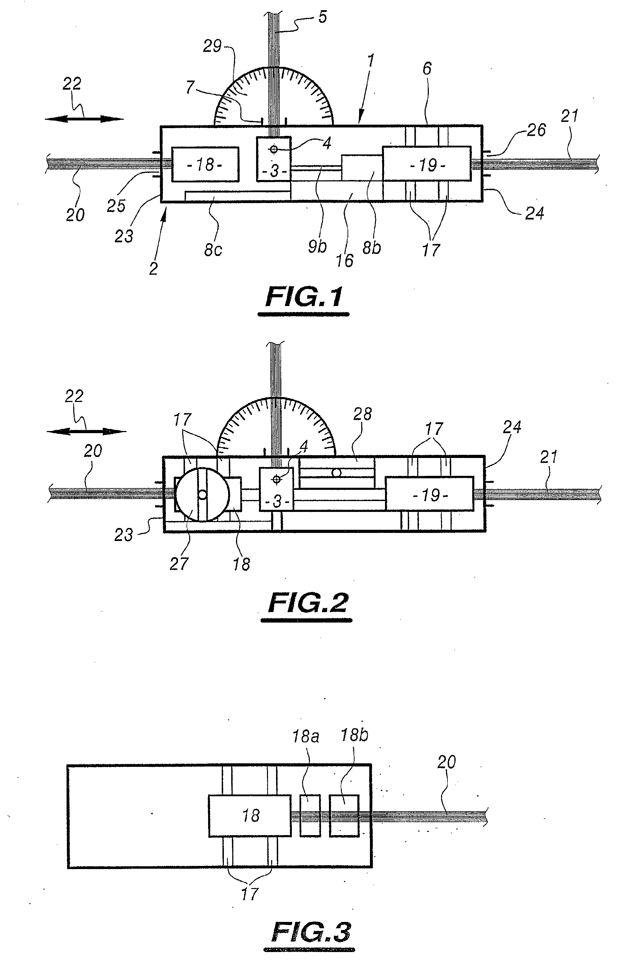

Dans une autre réalisation représentée à la figure 1, les moyens d'inclinaison comprennent un moteur linéaire 8b comportant une tige 9b pouvant être déplacée linéairement par actionnement du moteur. Le moteur 8b est disposé dans le boîtier 1 de manière à ce que la tige 9b puisse être déplacée suivant une direction transversale à l'axe 4 de rotation, et par exemple parallèle à celle-ci, en un mouvement de va-et-vient dans une plage déterminée de déplacement. La tige 9b est reliée à l'émetteur 3 laser d'inclinométrie à distance de l'axe 4 de rotation, de manière à provoquer la rotation de l'émetteur 3 autour de l'axe 4 par déplacement commandé de la tige 9b.

Le boîtier 1 comprend un récepteur 16 de télécommande par ondes électromagnétiques du moteur 8, 8b ou 10, permettant d'actionner le moteur d'un angle déterminé autour de son arbre 9 ou 11 ou d'une course linéaire déterminée de sa tige 9b en fonction du signal reçu par le récepteur 16. Le récepteur 16 reçoit des signaux de télécommande émis par un émetteur de télécommande se trouvant à distance et non représenté. Un indicateur de valeur angulaire peut être prévu sur le boîtier pour indiquer à l'utilisateur la valeur d'un angle correspondant à la position de l'émetteur 3 d'inclinométrie en fonction de la position de la partie mobile 9, 9b ou 11 du moteur 8, 8b ou 10. L'indicateur comporte par exemple un afficheur numérique.

Il est fixé dans le boîtier 1, par exemple par l'intermédiaire d'entretoises 17 de fixation solidaires des parois du boîtier 1, une paire de premier et deuxième émetteurs laser 18, 19, dénommés émetteurs laser de référence. Ces émetteurs laser de référence 18, 19 sont aptes à émettre des premier et deuxième faisceaux laser de référence 20, 21 visibles et collimatés.

Les émetteurs laser 18, 19 sont positionnés dans le boîtier 1 de manière à ce que le faisceau laser 20, 21 qu'ils émettent soient parallèles à une même direction 22 de référence. La surface 2 de sustentation du boîtier 1 est par exemple parallèle à la direction 22 de référence. L'axe 4 de rotation de l'émetteur laser 3 d'inclinométrie est transversal aux faisceaux 5, 20, 21. Chaque émetteur laser comprend, dans le trajet du faisceau laser émis, un collimateur laser et un circuit de protection, ainsi que représenté en 18a et 18b à la figure 3, et en 3a et 3b à la figure 4. Le circuit de protection comprend une ou plusieurs cellules photoélectriques de détection de présence par détection de différence de luminosité sur une distance déterminée, par exemple de un mètre, autour du circuit de protection. Lorsqu'une présence est détectée par le circuit de protection, celui-ci provoque, par des moyens automatiques de commande, l'arrêt des émetteurs laser.

Une alimentation électrique 8c, 10b, par exemple par batterie(s) ou pile(s) autonome(s), est en outre prévue dans le boîtier 1 pour le moteur 8, 8b, 10 et pour les émetteurs laser.

Les émetteurs laser 18, 19 sont disposés en vis-à-vis de deux faces opposées parallèles 23, 24 du boîtier 1, transversales à la direction 22 de référence et comportant chacune une fenêtre 25, 26 pour le passage des faisceaux 20, 21.

Le positionnement des émetteurs laser 18, 19 est par exemple tel que les faisceaux laser de référence 20, 21 sont alignés.

Le boîtier 1 comporte en outre des niveaux 27, 28 à bulle de vérification de verticalité, respectivement d'horizontalité du boîtier 1.

En outre, il est prévu un dispositif 29 de lecture visuelle d'angle, par exemple du type rapporteur gradué, transversalement au plan d'inclinométrie, sur la face supérieure du boîtier 1 à proximité de la fenêtre de passage du faisceau 5.

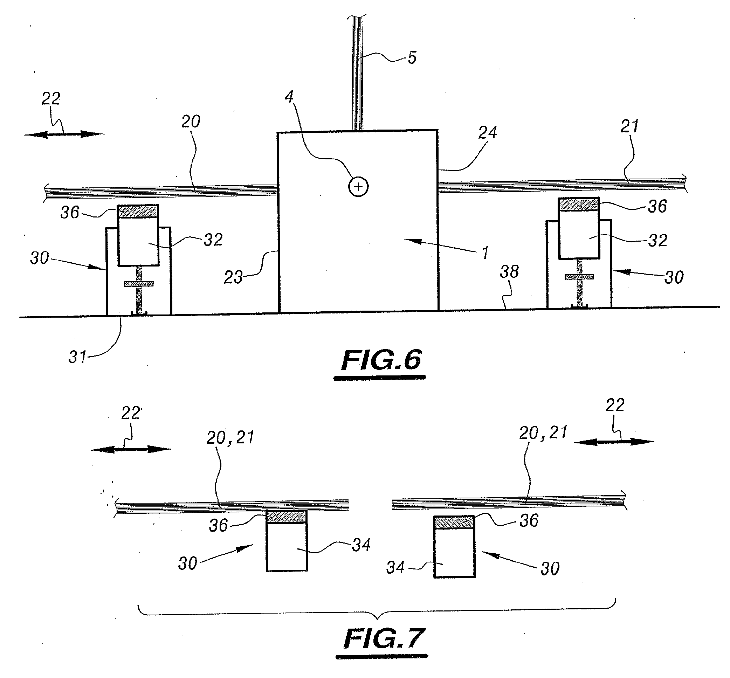

Il est en outre prévu des cales 30 associées aux faisceaux laser 20, 21 de référence et représentées aux figures 6 à 9.

Chaque cale 30 comporte une surface fixe 31, formée par exemple d'une surface de sustentation inférieure, par rapport à laquelle une pièce 32 de détection de passage de faisceaux laser est montée mobile. Des moyens de réglage de la position de la pièce mobile 32 par rapport à la surface fixe 31 sont prévus dans la cale 30. Ces moyens de réglage comprennent par exemple une vis micrométrique 33 comportant une mollette 34 de réglage manuel. Ces moyens de réglage permettent de régler la distance transversale entre la surface fixe 31 et la pièce mobile 32. La pièce mobile 32 comporte une partie 34 faisant saillie du corps 35 de la cale 30. La partie 34 saillante comporte une surface extérieure 36 de détection de passage de faisceau laser. La surface 36 de détection comprend par exemple une couche extérieure de matériau fluorescent sensible à l'incidence d'un faisceau laser de référence. Les faisceaux laser 20, 21 de référence ont une couleur visible différente de celle de la surface 36 de détection. Le corps 35 comporte également sur sa surface extérieure des repères 37 gradués pour le réglage. La surface 36 de détection comporte une partie rectiligne 38 et est par exemple plane.

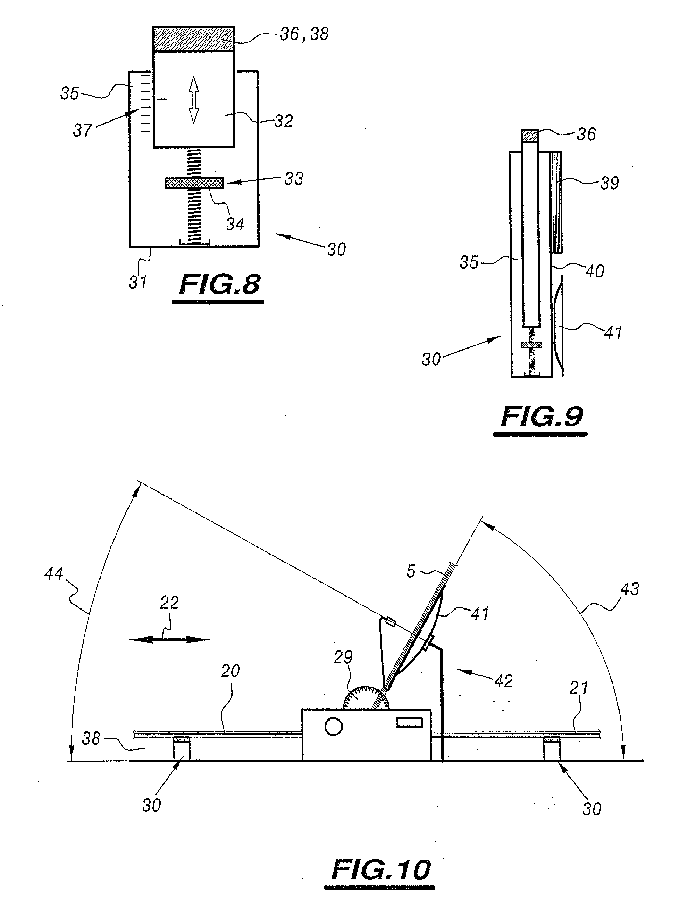

Ainsi que représenté sur la partie de gauche de la figure 7, l'affleurement d'un faisceau laser 20 ou 21 de référence sur la partie rectiligne 38 de la surface 36 de détection provoque sa coloration suivant une première couleur, différente de celle qu'a le reste de la surface 36 de détection et différente de la couleur de la surface 36 de détection, lorsque le faisceau laser 20, 21 de référence se trouve à distance de celle-ci, ainsi que représentée sur la partie de droite de la figure 7.

Une cale 30 peut être prévue pour chaque faisceau laser de référence 20, 21, ainsi que représenté à la figure 6. Lorsque le boîtier 1 et les cales 30 sont disposées sur un plan de support 38, et que les émetteurs laser de référence 18, 19 sont fixés dans le boîtier 1 pour émettre des faisceaux laser 20, 21 de référence alignés, les cales 30 peuvent être réglées pour avoir des surfaces 36 de détection situées à la même hauteur par rapport au plan 38, de manière à ce que les faisceaux laser 20, 21 affleurent aux surfaces de détection 36. Ainsi, tout mouvement du boîtier 1 dans le plan d'inclinométrie, par exemple vers l'un ou l'autre des côtés 23 ou 24, peut être détecté visuellement sur les cales 30, soit que l'une de celles-ci n'émet plus de signal lumineux caractéristique d'un affleurement de faisceau laser de référence, soit que les deux cales 30 émettent la même couleur caractéristique d'affleurement de faisceau laser de référence mais en ayant des positions de réglage différentes.

Il est ainsi permis de positionner précisément dans le plan d'inclinométrie la direction 22 de référence, par rapport à laquelle un angle peut être contrôlé par positionnement du faisceau laser 5 d'inclinométrie.

Lorsque les faisceaux 20, 21 sont parallèles sans être alignés, il suffit de prévoir un décalage correspondant à la distance entre ceux-ci pour les cales 30 associées, le réglage lu sur les cales 30 étant décalé de manière correspondante.

A la figure 9, la cale 30 comporte des moyens de fixation sur un support tels qu'un mur ou un montant. Ces moyens de fixation comprennent par exemple un aimant permanent 39 sur une surface latérale 40 du corps 35, permettant de fixer la cale 30 sur un support métallique. Il peut également être prévu, en plus ou en remplacement de l'aimant 39, une ventouse 41 sur la surface latérale 40 pour la fixation de la cale 30 à un support.

Le dispositif de positionnement angulaire suivant l'invention peut être utilisé par exemple pour contrôler le pointage d'une parabole de réception de signaux sur un satellite artificiel, ainsi que représenté à la figure 10. Le boîtier 1 étant positionné sur le support 38 grâce aux cales 30, le faisceau 5 est positionné de manière à affleurer en deux endroits du bord périphérique extérieur plan 41 de la parabole 42, suivant un angle du faisceau 5 par rapport à la direction de référence 22, déterminé en fonction de la position de la parabole 42 dans le plan d'inclinométrie. Lorsque la direction 22 de référence est l'horizontale et que la position du faisceau 5 d'inclinométrie est réglée sur la valeur angulaire 43 complémentaire de l'angle 44 de pointage de la parabole sur le satellite, l'utilisateur est alors certain que sa parabole est correctement orientée en élévation. Cette position du faisceau laser 5 étant fixée dans le boîtier 1 par commande de l'utilisateur, un mouvement de la parabole 42 dans le plan d'inclinométrie peut être détecté en vérifiant l'alignement du faisceau 5 par rapport à la surface 41. Il est en outre permis de faire la distinction entre une modification du positionnement du boîtier 1 par rapport à la parabole 42, d'un changement de position de la parabole 42 dans le plan d'inclinométrie. Il est ainsi permis de contrôler l'angle d'élévation de la parabole 42.

Cette application est intéressante pour maximiser le rapport signal sur bruit de la parabole.

## Revendications

1. Dispositif de positionnement angulaire, comportant un boîtier ayant au moins un émetteur laser (3) d'inclinométrie, apte à émettre un faisceau laser (5) collimaté d'inclinométrie, et des moyens (8, 10) d'inclinaison de l'émetteur laser (3) d'inclinométrie dans un plan d'inclinométrie pour le positionnement angulaire du faisceau laser (5) d'inclinométrie, **caractérisé en ce qu'**il est fixé dans le boîtier (1) au moins une paire de premier et deuxième émetteurs laser (18, 19) collimatés de référence, de manière à émettre des premier et deuxième faisceaux laser (20, 21) de référence visibles et collimatés, sortant de première et deuxième surfaces latérales (23, 24) opposées du boîtier (1) et sensiblement parallèles, ladite paire d'émetteurs laser de référence (18, 19) étant destinée à définir une direction (22) de référence par rapport à une paire de première et deuxième surfaces (36) de détection de passage des premier et deuxième faisceaux laser (20, 21) de référence, les moyens (8, 10) d'inclinaison étant aptes à incliner le faisceau laser (5) d'inclinométrie par rapport à ladite direction (22) de référence.

2. Dispositif de positionnement angulaire suivant la revendication 1, **caractérisé en ce que** les premier et deuxième émetteurs laser de référence (18, 19) sont fixés dans le boîtier (1) par des entretoises (17) de fixation.

3. Dispositif de positionnement angulaire suivant l'une quelconque des revendications 1 et 2, **caractérisé en ce que** les premier et deuxième émetteurs laser de référence (18, 19) sont fixés dans le boîtier (1) de manière à émettre des premier et deuxième faisceaux laser (20, 21) de référence alignés.

4. Dispositif de positionnement angulaire suivant l'une quelconque des revendications précédentes, **caractérisé en ce que** l'émetteur laser (3) d'inclinométrie est monté mobile en rotation sur un axe (4) de rotation et les moyens d'inclinaison comprennent des moyens (8, 10) d'entraînement en rotation de l'émetteur laser (3) d'inclinométrie par rapport à l'axe (4) de rotation.

5. Dispositif de positionnement angulaire suivant la revendication 4, **caractérisé en ce que** les moyens (8, 10) d'entraînement comportent un moteur (8) dont l'arbre rotatif (9) est solidaire en rotation de l'émetteur laser (3) d'inclinométrie en son axe (4) de rotation.

6. Dispositif de positionnement angulaire suivant la revendication 4, **caractérisé en ce que** les moyens (8, 10) d'entraînement comportent un moteur (10) dont l'arbre rotatif (11) est relié à une biellette (12) excentrée par rapport à l'arbre rotatif (11) et reliée à l'émetteur laser (3) d'inclinométrie à distance de son axe (4) de rotation, pour faire tourner l'émetteur laser (3) d'inclinométrie par rotation de l'arbre rotatif (11) du moteur (10).

7. Dispositif de positionnement angulaire selon la revendication 4, **caractérisé en ce que** les moyens d'entraînement comprennent un moteur (8b) linéaire, dont la tige (9b) mobile linéairement est reliée à l'émetteur laser (3) d'inclinométrie à distance de son axe (4) de rotation, pour faire tourner l'émetteur laser (3) d'inclinométrie par déplacement linéaire de la tige mobile (9b).

8. Dispositif de positionnement angulaire suivant l'une quelconque des revendications précédentes, **caractérisé en ce que** le boîtier (1) comporte un récepteur (16) d'ondes électromagnétiques pour la télécommande de la position des moyens d'inclinaison (8, 10).

9. Dispositif de positionnement angulaire suivant l'une quelconque des revendications précédentes, **caractérisé en ce qu'**il comporte un dispositif (29) d'indication de l'angle défini par le faisceau laser (5) d'inclinométrie.

10. Dispositif de positionnement angulaire suivant l'une quelconque des revendications précédentes, **caractérisé en ce que** le boîtier (1) comporte au moins un niveau (28) à bulle de lecture de position horizontale de la direction (22) de référence.

11. Dispositif de positionnement angulaire suivant l'une quelconque des revendications précédentes, **caractérisé en ce que** le boîtier (1) comporte au moins un niveau (27) à bulle de lecture de position verticale du plan d'inclinométrie.

12. Cale (30) comportant une surface fixe, **caractérisée en ce qu'**elle comporte en outre une surface (36) de détection de passage de faisceau laser destinée à détecter le passage d'un faisceau laser de référence (20, 21) émis par l'un des émetteurs laser de référence (18, 19) d'un dispositif de positionnement angulaire selon l'une quelconque des revendications 1 à 11, et des moyens (33) de réglage de la position transversale de la surface (36) de détection par rapport à la surface fixe (31).

13. Cale suivant la revendication 12, **caractérisée en ce que** la surface (36) de détection comprend une surface (36) ayant une couche fluorescente sensible à l'incidence d'un faisceau laser (20, 21) déterminé.

14. Cale suivant l'une quelconque des revendications 12 et 13, **caractérisée en ce que** les moyens (33) de réglage comportent une vis (33) de réglage manuel de ladite position transversale.

15. Utilisation du dispositif de positionnement angulaire suivant l'une quelconque des revendications 1 à 10 pour contrôler l'angle d'élévation d'une parabole (42) d'émission/réception d'informations vers ou depuis un satellite artificiel.
